Europäisches Patentamt

European Patent Office

Office européen des brevets

(19)

(11) EP 0 733 300 B1

(12) EUROPÄISCHE PATENTSCHRIFT

(45) Veröffentlichungstag und Bekanntmachung des Hinweises auf die Patenterteilung:
27.08.1997 Patentblatt 1997/35

(51) Int Cl.6: **H05B 7/144**, H05B 7/085

(21) Anmeldenummer: 95903238.4

(86) Internationale Anmeldenummer:
PCT/DE94/01497

(22) Anmeldetag: 06.12.1994

(87) Internationale Veröffentlichungsnummer:
WO 95/16336 (15.06.1995 Gazette 1995/25)

(54) **VERFAHREN UND EINRICHTUNG ZUR REGELUNG DER POSITION DER SPITZE EINER ELEKTROOFEN-ELEKTRODE**

PROCESS AND DEVICE FOR REGULATING THE POSITION OF THE TIP OF AN ELECTRIC FURNACE ELECTRODE

PROCEDE ET DISPOSITIF PERMETTANT DE REGULER LA POSITION DE LA POINTE D'UNE ELECTRODE DE FOUR ELECTRIQUE

(84) Benannte Vertragsstaaten:
**DE ES FR GB IT**

(30) Priorität: **07.12.1993 DE 4342498**

(43) Veröffentlichungstag der Anmeldung:
**25.09.1996 Patentblatt 1996/39**

(73) Patentinhaber: **MANNESMANN Aktiengesellschaft**
**40213 Düsseldorf (DE)**

(72) Erfinder:
• **WEISCHEDEL, Walter**
**D-40476 Düsseldorf (DE)**

• **KUNZE, Jürgen**
**D-46509 Xanten (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**US-A- 4 014 102          US-A- 4 843 234**

• **DATABASE WPI Week 8438, 23. Mai 1984 Derwent Publications Ltd., London, GB; AN 84231602 & DD,A,209 937 (ADW DER DDR ISOTOPE)**

**Beschreibung**

Die Erfindung betrifft ein Verfahren zur Regelung der Position der Spitze einer in einem mit Lichtbogen- oder Widerstandsheizung beheizten Elektroofen eintauchenden an einer Tragvorrichtung befestigten Elektrode, in die Präparate eingebracht werden und die Länge der Elektrode durch Erfassen der Strecke zwischen einem bestimmten Punkt bis zum Verdampfen des Präparates berechnet wird.

In Elektroöfen oder anderen Anlagen mit Verwendung von verbrauchbaren Elektroden ist es erforderlich, die genaue Positionierung der Einzelelektroden zu kennen. Dies ist von besonderer Wichtigkeit für Anlagen, bei denen die Elektrodenspitzen während des Ofenbetriebes nicht zu beobachten sind, z. B. bei geschlossenen Öfen oder Öfen mit Möllerabdeckung. Bei Prozessen zur Herstellung eisenhaltiger Legierungen werden selbstbackende Elektroden eingesetzt, bei der Produktion von Silicium-Metall werden, bedingt durch die geforderte Reinheit des Produktes, vorgebackene Elektroden verwendet.

Da die Kenntnis der exakten Lage der Elektrodenspitze für den Schmelzer von hoher Bedeutung ist, wird auch heute noch auf Verfahren zurückgegriffen, in denen mechanisch-optisch die Position der Spitze erfaßt wird, wobei aber der Schmelzprozeß unterbrochen wird und die Spitze zur Messung bzw. zur Abschätzung aus dem Möller bzw. der Schmelze herausgefahren werden muß. Darüber hinaus sind Verfahren bekannt, die während des Ofenbetriebes durchgeführt werden können.

So ist aus DE OS 25 22 801 ein Verfahren zur Messung der Länge bzw. Eintauchtiefe einer in den beschickten Herd eines elektrothermischen Schmelzofens eingetauchten Hohlelektrode bekannt, bei dem das Absenken eines Meßstabes an einem Seil gemessen wird und unter Berücksichtigung des Backenstandes der Elektrodenhalterung die Eintauchtiefe der Elektrode in die Beschickung bestimmt wird.

Zur Durchführung des Verfahrens ist eine sog. Hohlelektrode, erforderlich und eine komplizierte Abdichtung der Hohlelektrode gegen Ofengas. Darüber hinaus werden an den Seilen sog. Täufensonden angebracht, die bis zur völligen Gewichtsentlastung auf den festen Untergrund des Ofens abgesenkt werden mit den bekannten Schwierigkeiten einer exakten Durchführung des Seils durch die Abdichtung ohne Einfluß auf die Meßgenauigkeit. Als weiterer Nachteil erweist sich die Tatsache, daß die Höhe und die Materialzusammensetzung des festen Untergrund des Bodens undefinierbar und prozeßabhängig sind.

Aus der DE 36 00 662 A1 ist ein Verfahren zum Messen der Absenktiefe einer Elektrode eines Lichtbogenofens bekannt, bei den in die Elektroden bis zu ihrem Fußende durch Wärmeenergie des Schmelzbades verzehrbare Meßleitungen eingesetzt werden. Mit den Meßleitungen sollen elektrische oder akustische Signale erfaßt werden. Nachteil des aus dieser Schrift bekannten Verfahrens ist der thermische Einfluß auf die Meßleitung, der sich dazu noch rapide bei der vertikalen Bewegung einer Elektrode in Abhängigkeit von dem Bad, dem darauf sich befindenden Möller und der im Ofengefäß befindlichen Ausmauerung abhängt.

Beim Einsatz einer Söderbergelektrode ist der Einfluß der elektrischen Leitfähigkeit des gebackenen Elektrodenkörpers zwischen den Leitungen nicht kontrollierbar. Dies rührt durch die ungleichmäßigen Eigenschaften der gebakkenen Elektrodenmasse entlang der Vertikalachse aufgrund des diskontinuierlichen Nachsetzens der Elektrode infolge elektrischer oder metallurgischer Ursachen.

Weiterhin ist aus der DD PS 138 402 ein Verfahren zur Ermittlung der freien Länge von Elektroden des Typs Söderberg in Elektroöfen bekannt, bei dem die Länge des Vorschubes der Elektrode vom Durchgang eines in der Elektrode fixierten radioaktiven Präparates durch einen bestimmten Punkt bis zum Verdampfen des radioaktiven Präparates in der Lichtbogenzone gemessen und daraus die freie Elektrodenlänge berechnet wird.

In nachteiliger Weise werden bei diesem Verfahren radioaktive Präparate eingesetzt, welches besondere Maßnahmen zum Schutz der sich im Bereich des Ofens aufhaltenden Personen erfordert.

Ein weiterer Nachteil ist der Einsatz einer etwa in der Höhe der Elektrodenunterkante in der Möllermischung eingesetzten gekühlten Meßsonde. Diese Meßsonde wird in einem Rohr eingesetzt, die den Ofenprozeß behindert und beim Austritt des Kühlmediums in das Ofengefäß und damit in die Schmelze zu nicht kalkulierbaren Schäden führen kann. Nachteilig ist weiterhin die für das Präparat erforderliche Kapselung und auch die deutliche Entfernung der Meßsonde zur Lichtbogenzone von etwa 1 - 1,5 m. Darüber hinaus treten besondere Schwierigkeiten auf, die in einer festen Höhe gemessene Position des verdampfenden Präparates zu messen, da die Lage des Meßgerätes nur in Ausnahmefällen mit der Elektrodenspitze übereinstimmen wird.

Die Erfindung hat sich das Ziel gesetzt, ein Verfahren und eine Einrichtung zu schaffen, mit denen mit einfachen Mitteln die Nachteile bekannter Methoden vermeidend die Messung der Position der Elektrodenspitze und die Regelung der freien Länge der Elektrode unterhalb der Kontaktbacken sowie die Position der Elektrodenspitze während des Prozesses kontinuierlich exakt durchgeführt werden.

Die Erfindung löst diese Aufgabe durch die kennzeichnenden Merkmale des Verfahrensanspruchs 1 und des Vorrichtungsanspruchs 5. Erfindungsgemäß wird zur Regelung der Position der Elektrodenspitze als Meßmedium Gas verwandt. Dieses Gas wird unter Druck in Behältern eingeschlossen, die während der Fertigung an einer definierten Stelle der Elektrode eingebracht werden. Während des Schmelzbetriebes verzehrt sich die Elektrode an seiner Spitze.

Hierbei werden die an der Spitze sich befindenden Gasbehälter aufgeschmolzen und das Gas strömt im Bereich der Elektrode in den Ofenkopf. Dort wird das Gas durch eine Gasprobenentnahme aufgenommen und über einen Analysator angezeigt und somit identifiziert. Mit Hilfe des Analysators ist man in der Lage, die Qualität des Gases zu bestimmen. Mit der Kenntnis der exakten Zeit bzw. der Zeitabstände zwischen zwei Gasmessungen und der Kenntnis der definierten Lage der Gasbehälter in der Elektrode Läßt sich die aktuelle Elektrodenlänge in Abhängigkeit des eingestellten Abstandes zwischen zwei Behältern mit hoher Genauigkeit bestimmen.

Ergänzend zur Messung der Elektrodenlänge wird zum einen der Angriffspunkt der Elektrodenfassung an der Elektrode, die aktuelle Stellung der Elektrodentragvorrichtung sowie die aktuelle Lage eines ausgewählten Behälters im Bereich der Oberkante der Elektrode von einem Rechner erfaßt und zusätzlich zu den aus den Gasdaten gewonnenen Ergebnissen verarbeitet. In einer vorteilhaften Weiterbildung werden durch eine Meßeinrichtung die elektrischen Daten meßtechnisch erfaßt und dem Rechner übermittelt. Dieser Rechner ist gleichzeitig mit der Steuerung des vertikalen Verschiebens der Elektrodentragvorrichtung verbunden, so daß insgesamt ein geschlossener Regelkreis vorhanden ist. Die einzelnen Gasbehälter weisen Wandungen auf, beispielsweise aus Metall, das Schmelztemperaturen zwischen 1.400 und 2.600° besitzen kann. Die Behälter selber werden unter einem Druck von bis zu 100 bar gefüllt. Der Abstand der einzelnen Gasbehälter liegt im Bereich kleiner 1m. Der Abstand der Behälter bestimmt die Häufigkeit der Messungen. Es wird vorgeschlagen, einen Abstand von einer Größe ab 5 cm zu wählen.

Der Abstand der einzelnen Behälter kann periodisch gleichmäßig oder auch rhythmisch in unterschiedlichen Abständen sein. Bei unterschiedlichen Abständen läßt sich bei etwa gleichmäßigem Verzehr der Elektrode die Lage der Spitze mit Hilfe der Kontrollmessung unterschiedlicher Abstand exakt definieren. Weiterhin wird vorgeschlagen, verschiedene Behälter mit verschiedenen Gasen zu füllen, und zwar entweder bezüglich einer Elektrode aber auch bezüglich unterschiedlicher Elektroden bei einem mit mehreren Elektroden, z. B. mit Drehstrom betriebenen Ofen.

Die Probenahme - wie auch die Längenmeßeinrichtung - ist in geschützter Lage am offenen Ende des Ofengefäßes installiert. Bei einem z. B. wartungsbedingten Austausch sind diese Einrichtungen leicht zu wechseln und exakt wieder zu positionieren.

Selbstverständlich besteht die Möglichkeit, die Positionen der Elektrodenspitze optisch anzeigen zu lassen und die Anlage ggfs. manuell zu steuern.

Ein Beispiel der Erfindung ist in der beigefügten Zeichnung dargelegt. Es zeigt die

Figur 1: Schema des Elektrolichtbogenofens
Figur 2: die Rechenmethode zur Ermittlung der Position der Elektrodenspritze.

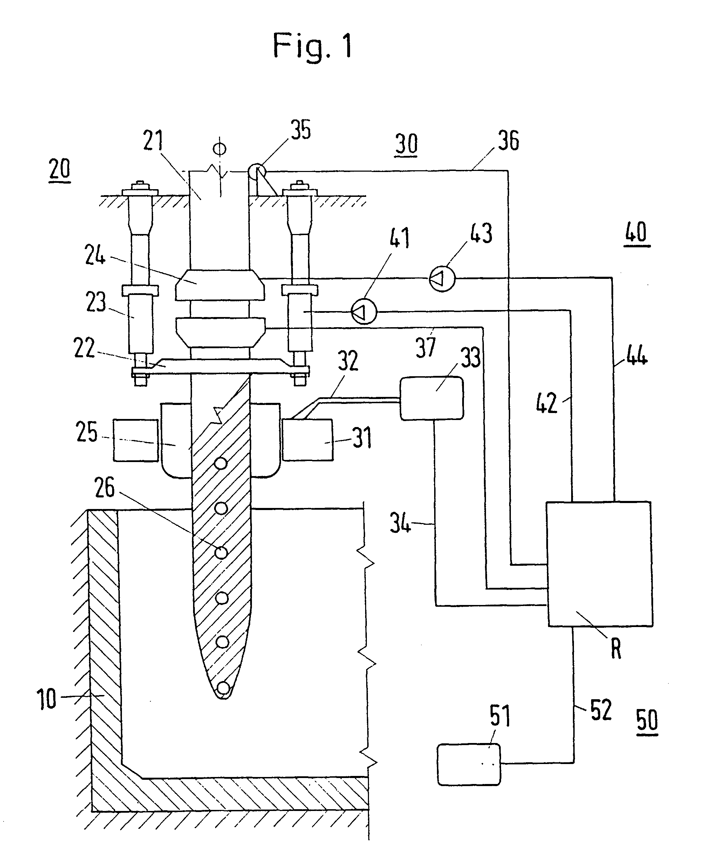

In der Figur 1 ist ein Gefäß 10 eines Elektroofens dargestellt, in die eine Elektrode 21 hineinragt. Die Elektrode 21 wird von einer Elektrodentragvorrichtung 20 gehalten, die Regulierzylinder 23 aufweist, welche über eine Traverse 22 miteinander verbunden sind, an der eine Nachsetzvorrichtung 24 angeordnet ist. Die Stromzufuhr zur Elektrode erfolgt über Kontaktbacken 25.

In die selbstbackende Elektrode werden Gasbehälter 26 während des Ofenbetriebes eingesetzt, bzw. sind diese bei vorgebackenen Elektroden außerhalb des Ofens lagegerecht montiert. Diese Gasbehälter sind zueinander vorgebbar beabstandet und werden der Elektrode an ihrem vom Schmelzbad wegweisenden Ende zugeführt.

Die Meßeinrichtung 30 steht mit einem Rechner R in Verbindung und weist eine Gasprobennahme 31 auf, die über eine Meßleitung 32 mit einem Analysengerät 33 verbunden ist.

Im Bereich des Oberkante der Elektrode 21 ist eine Meßeinrichtung 35 zur Erfassung der Koordinate eines der letzten Gasbehälter 26 vorgesehen. Weiterhin ist ein Gasanalysengerät 33 über eine Gasmeßleitung 34 und die Koordinatenmeßeinrichtung 35 über eine Längenmeßleitung 36 mit dem Rechner R verbunden.

Weiterhin ist der Rechner R mit einer Steuereinrichtung 40 verbunden, die einen Antrieb 41 der Elektrodentragvorrichtung und einen Antrieb 43 der Nachsetzvorrichtung aufweist, wobei der Antrieb 41 über eine Steuerleitung 42 und der Antrieb 43 über eine Steuerleitung 44 mit dem Rechner R verknüpft ist.

Der Rechner R ist außerdem noch mit einer Einrichtung zur Erfassung der elektrischen Daten verbunden, welches ein Meßgerät 51 sowie eine Meßleitung 52 aufweist.

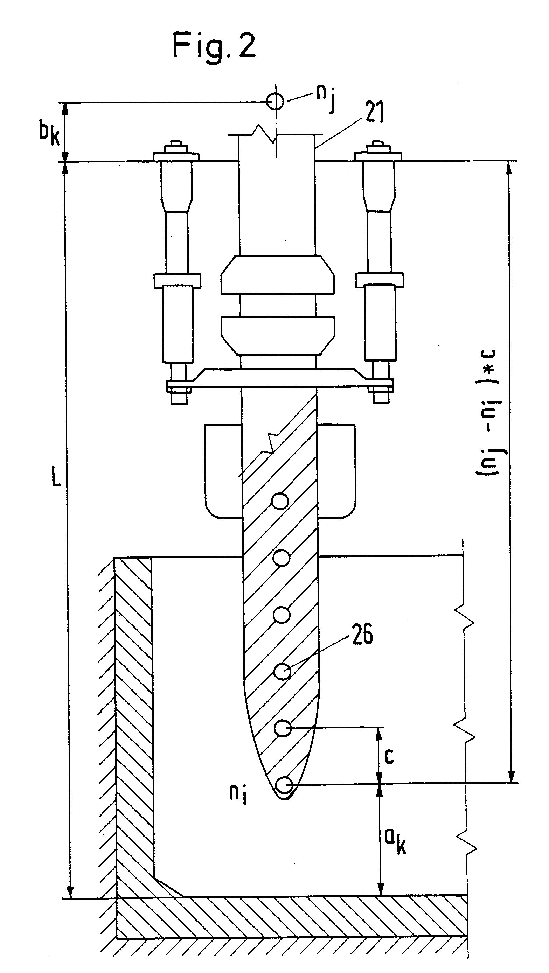

In der Figur 2 sind die Abstände zwischen zwei Behältern 26 mit c bezeichnet. Die einzelnen Gasbehälter 26 erhalten eine laufende Nummer, wobei $n_i$ die aktuelle Nummer des aufgeschmolzenen Gasbehälters und $n_j$ die laufende Nummer eines Gasbehälters 26 im Bereich der Oberkante der Elektrode 21 bezeichnet. Die Koordinate dieses Gasbehälters 26 mit der Ziffer $n_j$ wird mit $b_k$ bezeichnet. In der Figur 2 ist dieser Abstand des letzten Gasbehälters zur Ofenbühne gewählt worden. Weiterhin ist der baulich vorgegebene Abstand L, hier als für das Verfahren besonders geeignete Abstand zwischen der Ofenbühne und dem Außenmantel des Bodens des Ofengefäßes gewählt worden. Der Abstand dieses Fixpunktes zur Position der Elektrodenspitze ist mit $a_k$ bezeichnet worden.

Positionsliste:

10 Gefäß des Elektroofens
20 Elektrodentragvorrichtung
21 Elektrode
22 Traverse
23 Regulierzylinder
24 Klemmeinrichtung
25 Kontaktbacken
30 Meßeinrichtung
31 Gasprobe
32 Meßleitung
33 Analysengerät
34 Gasmeßleitung
35 Meßeinrichtung zur Erfassung der Koordinate eines vorgegebenen Gasbehälters
36 Längenmeßleitung
40 Steuereinrichtung
41 Antrieb der Elektrodentragvorrichtung
42 Steuerleitung
43 Antrieb der Nachsetzvorrichtung
44 Steuerleitung
50 Meßeinrichtung zur Erfassung der elektrischen Daten
51 Meßgeräte
52 Meßleitung
R Rechner

**Patentansprüche**

1. Verfahren zur Regelung der Position der Spitze einer in einem mit Lichtbogen- oder Widerstandsheizung beheizten Elektroofen eintauchenden, an einer Tragvorrichtung befestigten Elektrode, in die Präparate eingebracht werden und die Länge der Elektrode durch Erfassen der Strecke zwischen einem bestimmten Punkt bis zur Verdampfung des Präparates berechnet wird,
   gekennzeichnet durch folgende Schritte:

   a) bei der Herstellung der Elektrode werden in diese kettenförmig aneinandergereihte Gasbehälter mit einem Abstand (c) eingebracht.

   b) jeder Gasbehälter bekommt eine laufende Nummer ($n_i$)

   c) die Koordinate ($b_k$) eines der Gasbehälter im Bereich der Oberkante der Elektrode wird erfaßt und einem Rechner übermittelt.

   d) während des Betriebes des Elektroofens verbraucht sich die Elektrode im Bereich der Elektrodenspitze, die Gasbehälter schmelzen auf und das im Ofengefäß aufsteigende Gas wird meßtechnisch erfaßt und dem Rechner mitgeteilt.

   e) aus den Daten des letzten Gasbehälters mit der laufenden Nummer ($n_j$) und der über die Gasanalyse ermittelten aktuellen Nummer des aufgeschmolzenen Gasbehälters ($n_i$) kalkuliert der Rechner die Position der Elektrodenspitze zu diesem Zeitpunkt als Abstand ($a_k$) zu einem Fixpunkt, der zum Fixpunkt der Koordinate des letzten Gasbehälters den Abstand (L) aufweist, entsprechend:

   $$a_k = L - (n_i - n_j) * c + b_k$$

   und steuert die Lage der Elektrodentragvorrichtung und/oder der Elektrodenfassung zur Elektrode.

2. Verfahren nach Anspruch 1,

dadurch gekennzeichnet,
daß aus zwei nacheinander folgenden Messungen ($a_k$) und ($a_{k-1}$) und dem Zeitabstand zwischen diesen ($\Delta t$) sowie auch den Zeitabstand von der letzten Messung (t), Zahl der vorgenommenen Nachsetzvorgänge (z) und das Maß des Nachsetzens ($\Delta l$) wird von dem Rechner die momentane Elektrodenspitzenposition ($a_t$) prognostiziert

$$a_t = L - (n_i - n_j) * c + [(a_k - a_{k-1}) * t/\Delta t] + b_k - z * \Delta l$$

3. Verfahren nach Anspruch 1,
dadurch gekennzeichnet,
daß die Gasbehälter einen periodischen Abstand (c) von c = 1:2:3 x $\Delta$ c mit $\Delta$c als kleinsten vorgegebenen Abstand vorweisen,

4. Verfahren nach einem der vorgenannten Ansprüche,
dadurch gekennzeichnet,
daß in die Elektrode abwechselnd Gasbehälter mit unterschiedlicher Gasfüllung eingebracht werden.

5. Einrichtung mit einem Elektroofen mit Lichtbogen- oder Widerstandsbeheizung, der eine Elekrodentragvorrichtung aufweist, mit der mindestens eine Elektrode in das Ofengefäß eintauchbar ist, sowie einer Meßeinrichtung zur Erfassung von Längen und Bewegungen der Elektrodentragvorrichtung und/oder der Elektrode und mit einer Steuereinrichtung zum vertikalen Verschieben der von einer Klemmeinrichtung gegriffenen Elektrode zur Durchführung des Verfahrens nach Anspruch 1,
dadurch gekennzeichnet,
daß die Elektrode in definierten Abständen voneinander angeordnete Gasbehältern (26) aufweist und
daß eine Vorrichtung zur Gasprobennahme (31 - 33) vorgesehen ist, die oberhalb des Gefäßes (10) des Elektroofens im Bereich der Elektrode (21) angeordnet ist und die meßtechnisch mit einem Rechner (R) in Verbindung steht, der steuerungstechnisch Einfluß auf den Antrieb (41) der Elektrodentragvorrichtung (20) nimmt.

6. Einrichtung nach Anspruch 5,
dadurch gekennzeichnet,
daß in die Elektrode (21) Gasbehälter (26) eingebracht sind, deren Wandungen Schmelztemperaturen von über 1.400° C aufweisen.

7. Einrichtung nach Anspruch 6,
dadurch gekennzeichnet,
daß in Behälter (26) Gas, z. B. Helium, unter einem Druck von p größer 1 bar eingeschlossen ist.

8. Einrichtung nach Anspruch 5,
dadurch gekennzeichnet,
daß die Gasbehälter (26) in der Elektrode (21) mit einem Mindestabstand von c= 5 cm eingebunden sind.

9. Einrichtung nach Anspruch 5,
dadurch gekennzeichnet,
daß der Rechner (R) über eine Steuerleitung (44) mit einem Antrieb (43) in Verbindung steht, mit dem die Klemmeinrichtung (24) der Elektrode (21) lös- und anpreßbar ist.

10. Einrichtung nach Anspruch 5.
dadurch gekennzeichnet,
daß ein Meßgerät (51) zur Erfassung der elektrischen Daten vorgesehen ist, das über eine Meßleitung (52) mit dem Rechner (R) in Verbindung steht, der steuerungstechnisch Einfluß auf den Antrieb (41) der Regulierzylinder (23) und auf den Antrieb (43) der Klemmeinrichtung (24) nimmt.

**Claims**

1. A method for controlling the position of the tip of an electrode fastened to a support device and immersed into an electric furnace heated by electric-arc or resistance heating, in which preparations are introduced into the electrode and the length of the electrode is calculated by recording the distance between a predetermined point to the point at which the preparation vaporizes,
characterized by the following steps:

a) the electrode is fitted during manufacture with gas containers in a chain-like series arrangement at intervals (c);

b) each gas container is given serial number ($n_i$);

c) the coordinate ($b_k$) of one of the gas containers near the upper edge of the electrode is determined and entered into a computer;

d) while the electric oven is in operation, the electrode is consumed in the area of the electrode tip, the gas containers melt away allowing gas to rise in the furnace vessel and readings are taken on the gas using metrological equipment and entered into the computer;

e) using the data for the final gas container in the chain having serial number ($n_j$), and the number ($n_i$) of the last melted gas container as determined by gas analysis, the computer calculates the current position of the electrode tip as the distance ($a_k$) to a fixed point, which is at distance (L) to the fixed point on the coordinate axis of the final gas container, applying the formula

$$a_k = L - (n_i - n_j) \times c + b_k$$

and controls the position of the electrode support device and/or the electrode clamp relative to the electrode.

2. A method as claimed in claim 1,
characterized in that
the computer uses two consecutive measurements ($a_k$) and ($a_{k-1}$), the time interval between them ($\Delta t$), the time interval since the last measurement (t), the number of feeds (z) and the extent of the feeds ($\Delta l$) to determine the current position of the electrode tip ($a_t$) as follows

$$a_t = L - (n_i - n_j) \times c + [(a_k - a_{k-1}) \times t/\Delta t] + b_k - z \times \Delta l$$

3. A method as claimed in claim 1,
characterized in that
the gas containers are arranged at a regular interval (c) with c = 1:2:3 $\times \Delta c$ where $\Delta c$ is the smallest predetermined distance.

4. A method as claimed in any preceding claims,
characterized in that
gas containers filled with different gases are alternatingly arranged in the electrode.

5. An arrangement including an electric furnace with arc or resistance heating which has an electrode support device with which at least one electrode may be immersed into the furnace vessel, a measuring device for recording the lengths and movements of the electrode support device and/or the electrode, and a control device to vertically move the electrode which is gripped by a clamping device, for performing the method claimed in claim 1, characterized in that the electrode is provided with gas containers (26) arranged at defined intervals from one another and that a gas sampling device (31-33) is provided which is arranged above the electric furnace vessel (10) near the electrode (21) and which transfers measurement data to a computer (R), which has a control function over the drive (41) of the electrode support device (20).

6. An arrangement as claimed in claim 5,
characterized in that
gas containers (26) are provided in the electrode (21) whose walls have a melting temperature of over 1,400°C.

7. An arrangement as claimed in claim 6,
characterized in that

the gas in the container (26), e.g. helium, is enclosed at a pressure of p > 1 bar.

8. An arrangement as claimed in claim 5,
characterized in that
the gas containers (26) in the electrode (21) are embedded at intervals of at least c = 5 cm.

9. Arrangement as claimed in claim 5,
characterized in that
the computer (R) is connected via a control line (44) to a drive with which the clamping device (24) of the electrode (21) can be released or engaged.

10. An arrangement as claimed in claim 5,
characterized in that
a measuring unit (51) for recording electrical data is provided which is connected via a measuring line (52) to the computer (R), which has a control function over the drive (41) of the regulating cylinder (23) and over the drive (43) of the clamping device (24).

## Revendications

1. Procédé de réglage de la position de la pointe d'une électrode fixée sur un support et plongeant dans un four électrique, chauffée par un arc électrique ou par effet Joule, et dans laquelle sont introduites des préparations et dont la longueur est calculée par la mesure de la distance entre un point déterminé jusqu'à l'évaporation de la préparation,
caractérisé par les éléments suivants :

a) Lors de la fabrication de l'électrode, des réservoirs à gaz rangés en chaîne selon un intervalle (c) sont introduits dans l'électrode.

b) Un numéro d'ordre ($n_i$) est attribué à chaque réservoir.

c) La coordonnée ($b_k$) de l'un des réservoirs situé à proximité du rebord supérieur de l'électrode est relevée et transmise à un ordinateur.

d) Pendant le fonctionnement du four électrique, l'électrode se consomme dans le secteur de la pointe, les réservoirs fondent et la quantité de gaz montant dans l'enveloppe du four est mesurée et transmise à l'ordinateur.

e) A partir des données du dernier réservoir portant le numéro d'ordre ($n_j$) et du numéro actuel, déterminé par l'analyse du gaz, du réservoir fondu ($n_i$), l'ordinateur calcule la position de la pointe de l'électrode à ce moment comme distance ($a_k$) d'un point fixe éloigné de la distance (L) du point fixe de la coordonnée du dernier réservoir, selon la formule

$$a_k = L - (n_i - n_j) * c + b_k$$

et commande la position du support de l'électrode et/ou du porte-électrode par rapport à l'électrode.

2. Procédé selon revendication 1,
ainsi caractérisé :
à partir de deux mesures consécutives ($a_k$) et ($a_{k-1}$) et de l'intervalle de temps ($\Delta t$) entre celles-ci ainsi que du temps écoulé depuis la dernière mesure (t), du nombre d'opérations de positionnement (z) et de l'importance du positionnement ($\Delta l$), l'ordinateur prévoit la position momentanée de l'électrode ($a_t$) :

$$a_t = L - (n_i - n_j) * c + \left[ (a_k - a_{k-1}) * t / \Delta t \right] + b_k - z * \Delta l$$

**3.** Procédé selon revendication 1,
ainsi caractérisé :
les réservoirs de gaz présentent un intervalle périodique (c) de c = 1:2:3 x Δ c, Δ c étant le plus petit intervalle prescrit.

**4.** Procédé selon l'une des revendications précitées,
ainsi caractérisé :
les réservoirs à gaz placés dans l'électrode sont remplis en alternance de gaz différents.

**5.** Installation comportant un four électrique chauffé à l'arc électrique ou par effet Joule et possédant un support d'électrode grâce auquel une électrode au moins peut être plongée dans l'enveloppe du four, ainsi qu'avec un appareil de mesure permettant de saisir les longueurs et les mouvements du support d'électrode et/ou de l'électrode, et un appareil de commande permettant de déplacer verticalement l'électrode maintenue par un dispositif de serrage afin de réaliser le procédé selon la revendication 1,
ainsi caractérisée :
l'électrode est munie de réservoirs à gaz (26) placés à intervalles définis et
il est prévu un système de prélèvement d'échantillon de gaz (31-33) qui est placé au-dessus de l'enveloppe du four électrique à proximité de l'électrode (21) et qui transmet le résultat des mesures à un ordinateur (R) qui agit sur la commande (41) du support d'électrode (20).

**6.** Installation selon revendication 5,
ainsi caractérisée :
l'électrode (21) comporte des réservoirs à gaz (26) dont les parois présentent des températures de fusion de plus de 1 400 ° C.

**7.** Installation selon revendication 5,
ainsi caractérisée :
les réservoirs (26) contiennent du gaz, p. ex. de l'hélium, sous une pression p supérieure à 1 bar.

**8.** Installation selon revendication 5,
ainsi caractérisée :
les réservoirs à gaz (26) sont alignés dans l'électrode (21) selon un intervalle minimum de c = 5 cm.

**9.** Installation selon revendication 5,
ainsi caractérisée :
l'ordinateur (R) est relié par un câble (44) à une commande (43) par laquelle le dispositif de serrage (24) de l'électrode (21) peut être serré ou desserré.

**10.** Installation selon revendication 5,
ainsi caractérisée :
un appareil de mesure (51), destiné à enregistrer les données électriques, est relié par un câble (52) à l'ordinateur (R) qui agit sur la commande (41) des cylindres de régulation (23) et sur la commande (43) du dispositif de serrage (24).

# Fig. 1

# Fig. 2